# EUROPEAN PATENT APPLICATION

(11) **EP 4 711 330 A1**
(43) Date of publication of application: **18.03.2026**
(21) Application number: 24839421.5
(22) Date of filing: 17.06.2024
(51) Int. Cl.: C01B 25/32, C21C 5/28, C22B 3/06, C22B 3/08, C22B 3/10, C22B 3/24, C22B 3/44

(54) **PHOSPHORIC ACID SALT PRODUCTION METHOD**

(30) Priority: 12.07.2023 JP 2023114238
(71) Applicant: JFE Steel Corporation, Tokyo 100-0011 (JP); Tokushima University, Tokushima-shi, Tokushima 770-8501 (JP)
(72) Inventor: YANO, Hiromu, Tokyo 100-0011 (JP); MATSUNAGA, Hisahiro, Tokyo 100-0011 (JP); TAKAHASHI, Katsunori, Tokyo 100-0011 (JP); SUGIYAMA, Shigeru, Tokushima-shi, Tokushima 770-8501 (JP)
(74) Representative: Grünecker Patent- und Rechtsanwälte PartG mbB
(86) International application number: PCT/JP2024/021829
(87) International publication number: WO 2025/013525

(57) **Abstract**

Provided a method for producing a phosphate capable of obtaining a target phosphate with few impurities. This method for producing a phosphate is a method for producing a target phosphate and the method includes: a precipitation formation step (S1) of adding an alkali to a phosphorus-containing liquid to obtain a precipitate; and a dissolution step (S2) of dissolving the precipitate with an acid to obtain a phosphoric acid liquid, wherein in the precipitation formation step (S1), the composition of the precipitate is changed by changing a timing of adding the alkali according to the type of the phosphate.

## Description

### TECHNICAL FIELD

The present invention relates to a method for producing a phosphate.

### BACKGROUND ART

Phosphorus is a resource that is used in a wide range of fields such as agriculture, food, medicine, and industry and is unevenly distributed worldwide, and the production countries are limited to China, the United States, Morocco, and the like.

Phosphorus resources distributed in Japan are phosphorus products such as yellow phosphorus and crude phosphoric acid, or phosphate rocks which are raw materials of these, and the entire supply is dependent on imports.

Incidentally, the phosphorus concentration of hot metal extracted from a blast furnace is about 0.1 mass%. Then, the phosphoric acid concentration in steelmaking slag generated by subjecting this hot metal to a conventional general treatment (a dephosphorization treatment, decarburization refining) is as low as at most about 5 mass% in terms of P₂O₅.

For this reason, the steelmaking slag is used as a material for civil engineering such as a roadbed material, and phosphorus in the steelmaking slag has not been recovered.

However, in recent years, since the price of phosphorus resources has increased due to depletion of phosphate rocks, enclosure of phosphate rocks by China, the United States, and the like, phosphorus in steelmaking slag generated during steel smelting has been reevaluated as a valuable phosphorus resource.

Patent Literature 1 discloses a method for recovering phosphorus in the form of calcium phosphate (that is, producing calcium phosphate) from dephosphorized slag, which is a type of steelmaking slag.

### CITATION LIST

### PATENT LITERATURE

Patent Literature 1: JP 2022-150640 A

### SUMMARY OF INVENTION

### TECHNICAL PROBLEMS

Calcium phosphate produced by the method described in Patent Literature 1 may contain a large amount of impurities such as Si. In addition, phosphorus (phosphate) cannot be recovered in a form other than calcium phosphate.

The present invention has been made in view of the above points, and an object of the present invention is to provide a method for producing a phosphate capable of obtaining a target phosphate with few impurities.

### SOLUTION TO PROBLEMS

As a result of intensive studies, the present inventors have found that the above object is achieved by adopting the following configuration, and have completed the present invention.

That is, the present invention provides the following [1] to [9].
[1] A method for producing a phosphate, which is a method for producing a target phosphate, the method comprising: a precipitation formation step of adding an alkali to a phosphorus-containing liquid to obtain a precipitate; and a dissolution step of dissolving the precipitate with an acid to obtain a phosphoric acid liquid, wherein in the precipitation formation step, the composition of the precipitate is changed by changing a timing of adding the alkali according to the type of the phosphate.
[2] The method for producing a phosphate according to [1] above, further comprising an addition step after the dissolution step, wherein in the addition step, an additional raw material corresponding to the type of the phosphate is added to the phosphoric acid liquid to obtain the phosphate.
[3] The method for producing a phosphate according to [2] above, further comprising a cation exchange step after the dissolution step and before the addition step, wherein in the cation exchange step, the phosphoric acid liquid is treated using a cation exchange resin.
[4] The method for producing a phosphate according to any one of [1] to [3] above, wherein in the dissolution step, a strong acid at a concentration of 10 M or more is used as the acid.
[5] The method for producing a phosphate according to any one of [1] to [4] above, wherein in the dissolution step, at least one selected from a group consisting of nitric acid, hydrochloric acid, sulfuric acid, phosphoric acid, and an organic acid is used as the acid.
[6] The method for producing a phosphate according to any one of [1] to [5] above, further comprising an acid leaching step before the precipitation formation step, wherein
   in the acid leaching step, a component contained in a starting material containing phosphorus is leached into an acid to obtain the phosphorus-containing liquid.
[7] The method for producing a phosphate according to [6] above, wherein in the dissolution step, a time from when the phosphorus-containing liquid is obtained to when the alkali is added is changed.
[8] The method for producing a phosphate according to [6] or [7] above, wherein the starting material is steelmaking slag.
[9] The method for producing a phosphate according to any one of [1] to [8] above, wherein the phosphorus-containing liquid contains at least calcium, phosphorus, aluminum, and iron elements.

### ADVANTAGEOUS EFFECTS OF INVENTION

According to the present invention, a target phosphate can be obtained with few impurities.

### BRIEF DESCRIPTION OF DRAWINGS

[FIG. 1] FIG. 1 is a flowchart showing a flow of a method for producing a phosphate of the present embodiment.
[FIG. 2] FIG. 2 is a graph showing the relationship between the timing of adding an alkali to a phosphorus-containing liquid and the precipitation ratio of each element.
[FIG. 3] FIG. 3 is a graph showing the content (unit: mmol/100 mL) of each element in a phosphoric acid liquid for each concentration (0.5 M and 13.5 M) of an acid used.
[FIG. 4] FIG. 4 is an X-ray diffraction pattern of a residue (III) obtained when an acid (nitric acid) at a concentration of 13.5 M was used.

### DESCRIPTION OF EMBODIMENTS

### [Method for producing phosphate]

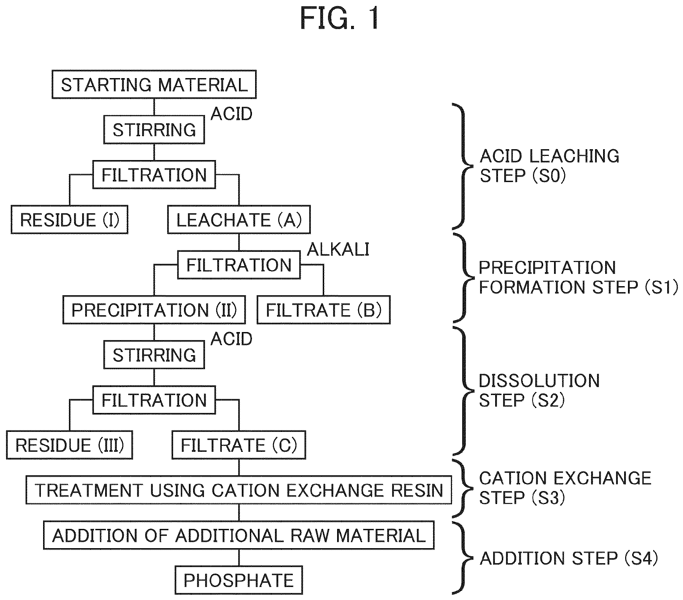

A method for producing a phosphate of the present embodiment will be described with reference to FIGS. 1 to 4.

FIG. 1 is a flowchart showing a flow of a method for producing a phosphate of the present embodiment.

The method for producing a phosphate of the present embodiment is a method for recovering phosphorus in the form of a target phosphate (such as calcium phosphate or iron phosphate) from a starting material, and includes an acid leaching step (S0), a precipitation formation step (S1), a dissolution step (S2), and a cation exchange step (S3) in this order.

The acid leaching step (S0) and the cation exchange step (S3) are optional steps and may be omitted.

The method for producing a phosphate of the present embodiment may include an addition step (S4) after the dissolution step (S2) or the cation exchange step (S3).

### <Acid leaching step (S0)>

In the acid leaching step (S0), components contained in the starting material are leached into an acid to obtain a phosphorus-containing liquid. Specifically, for example, a starting material is added to an acid, and the mixture is stirred, and then filtered. Thereby, a residue (I) and a leachate (A) are obtained. The leachate (A) is a phosphorus-containing liquid.

Examples of the acid used in the acid leaching step (S0) include at least one selected from the group consisting of nitric acid, hydrochloric acid, sulfuric acid, phosphoric acid, and an organic acid (for example, citric acid), and nitric acid or hydrochloric acid is preferable, and nitric acid is more preferable.

The concentration of the acid is not particularly limited, but is preferably 0.1 to 1.5 M, and more preferably 0.3 to 0.8 M.

Examples of the starting material include steelmaking slag such as dephosphorized slag and decarburized slag.

The starting material is a phosphorus-containing compound, and preferably contains at least CaO, P₂O₅, Al₂O₃, and FetO.

When the starting material is steelmaking slag, the pH of the acid used in the acid leaching step (S0) is preferably 4.0 or less, more preferably 1.0 or less, and still more preferably 0.5 or less.

For example, in a case where the pH of the acid satisfies this range, when the ratio of the starting material to the acid increases, the Si elution amount increases accordingly, and the resulting phosphorus-containing liquid may gel. Therefore, it is preferable to set the ratio between the starting material and the acid by carefully examining the situation of each step described later.

The pH is measured in accordance with JIS Z 8802:2011 "Methods for determination of pH of aqueous solutions" (hereinafter the same shall apply). The temperature at which the pH is measured is 25°C unless otherwise specified.

### <Precipitation formation step (S1)>

In the precipitation formation step (S1), a precipitate is obtained by adding an alkali to the phosphorus-containing liquid. Specifically, for example, an alkali is added to the phosphorus-containing liquid, and then filtration is performed. Thereby, a precipitation (II) and a filtrate (B) are obtained. The precipitation (II) is a precipitate.

As the phosphorus-containing liquid, for example, the leachate (A) obtained in the acid leaching step (S0) is used, but one obtained in another step may be used.

The phosphorus-containing liquid preferably contains at least each element of calcium (Ca), phosphorus (P), aluminum (Al), and iron (Fe).

The phosphorus-containing liquid may further contain elements such as silicon (Si), magnesium (Mg), and manganese (Mn) .

Examples of the alkali used in the precipitation formation step (S1) include sodium hydroxide, potassium hydroxide, calcium hydroxide, and aqueous ammonia (NH₄OH) .

Among them, aqueous ammonia is preferable because it does not have unnecessary cations.

The concentration of aqueous ammonia is not particularly limited, but is preferably 20 to 40 mass%, and more preferably 25 to 35 mass%.

### <<Alkali addition timing>>

The present inventors examined suitable conditions for the precipitation formation step (S1) from the viewpoint of selectively forming a target phosphate and from the viewpoint of reducing the amount of impurities.

The "impurity" is an element other than an element constituting a target phosphate, and is, for example, an element (Fe, Si, Al, or the like) other than calcium (Ca), phosphorus (P), and oxygen (O) when the target phosphate is calcium phosphate.

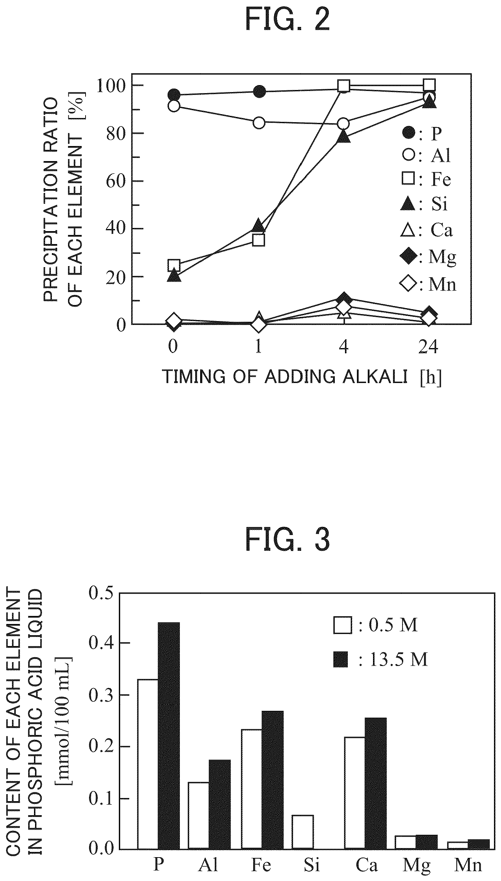

As a result of examination, it was found that the composition of the precipitate to be obtained changes according to the timing of adding the alkali to the phosphorus-containing liquid (see FIG. 2). Here, aqueous ammonia (concentration: 28 mass%) was used as the alkali.

FIG. 2 is a graph showing the relationship between the timing of adding the alkali to the phosphorus-containing liquid and the precipitation ratio of each element.

Here, the timing of adding the alkali to the phosphorus-containing liquid specifically means, for example, the time from when the phosphorus-containing liquid is obtained in the acid leaching step (S0) to when the alkali is added thereto.

Incidentally, the vertical axis in FIG. 2 represents the ratio (precipitation ratio) of the content in the precipitate obtained by adding the alkali to the content in the phosphorus-containing liquid before adding the alkali with respect to each element.

For example, when the precipitation ratio of element M is 100%, it means that the element M in the phosphorus-containing liquid all moved to the precipitate. On the other hand, when the precipitation ratio is 0%, it means that the element M in the phosphorus-containing liquid did not move to the precipitate at all.

Referring to FIG. 2, it can be seen that when the timing of adding the alkali is early (for example, 1 h or less), the concentrations of Fe and Si in the precipitate are low.

On the other hand, it can be seen that when the timing of adding the alkali is late (for example, 4 h or more), the concentrations of Fe and Si in the precipitate are high.

Therefore, in the present embodiment, in the precipitation formation step (S1), the timing of adding the alkali to the phosphorus-containing liquid is changed according to the type of the target phosphate. This changes the composition of the precipitate to be obtained.

Specifically, for example, the time from when the phosphorus-containing liquid is obtained in the acid leaching step (S0) to when the alkali is added thereto is changed.

For example, when the target phosphate is iron phosphate, the timing of adding the alkali is delayed in order to sufficiently incorporate Fe as a necessary element in the precipitate. Specifically, the time from when the phosphorus-containing liquid is obtained to when the alkali is added is preferably 4 h or more.

Note that, in this case, since Si as an impurity is also contained in a large amount in the precipitate, it is preferable to remove Si in the dissolution step (S2) described later.

In addition, for example, when the target phosphate is calcium phosphate, the timing of adding the alkali is accelerated in order to reduce Si and Fe as impurities from the precipitate. Specifically, the time from when the phosphorus-containing liquid is obtained to when the alkali is added is preferably 1 h or less.

In this case, since the amount of necessary Ca is also small in the precipitate, it is preferable to add an additional raw material (calcium nitrate) corresponding to the target phosphate (calcium phosphate) in the addition step (S4) described later.

Furthermore, also in this case, Si may be removed in the dissolution step (S2) described later.

### <Dissolution step (S2)>

In the dissolution step (S2), the precipitate (II), which is the precipitate obtained in the precipitation formation step (S1), is dissolved using an acid. Thus, a phosphoric acid liquid is obtained. Specifically, for example, the precipitate is added to an acid, and the mixture is stirred, and then filtered. Thereby, a residue (III) and a filtrate (C) are obtained. The filtrate (C) is the phosphoric acid liquid.

Examples of the acid used in the dissolution step (S2) include at least one selected from the group consisting of nitric acid, hydrochloric acid, sulfuric acid, phosphoric acid, and an organic acid (for example, citric acid), and nitric acid or hydrochloric acid is preferable, and nitric acid is more preferable.

### <<Concentration of acid>>

The present inventors have examined suitable conditions for the dissolution step (S2) from the viewpoint of selectively forming a target phosphate and from the viewpoint of reducing the amount of impurities.

As a result of examination, it was found that the composition of the resulting phosphoric acid liquid changes depending on the concentration of the acid (for example, nitric acid) used in the dissolution step (S2) (see FIG. 3).

FIG. 3 is a graph showing the content (unit: mmol/100 mL) of each element in the phosphoric acid liquid for each concentration (0.5 M and 13.5 M) of an acid used. The phosphoric acid liquid shown in FIG. 3 is the filtrate (C) obtained by dissolving the precipitate (precipitate (II)) when the alkali addition timing is set to 4 h or more in the precipitation formation step (S1) described above.

Referring to FIG. 3, it can be seen that when the concentration of the acid (nitric acid) used is 13.5 M, the content of Si in the phosphoric acid liquid is very small.

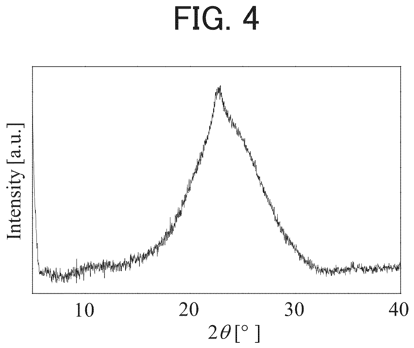

FIG. 4 is an X-ray diffraction pattern of the residue (III) obtained when the acid (nitric acid) at a concentration of 13.5 M was used. From FIG. 4, it can be seen that the residue (III) contained silica (SiO₂), and Si could be separated as silica.

Therefore, in the present embodiment, the concentration of the acid used in the dissolution step (S2) is preferably 10.0 M or more, more preferably 11.5 M or more, and still more preferably 13.0 M or more. This can reduce the content of Si in the resulting phosphoric acid liquid.

For example, when the target phosphate is iron phosphate, calcium phosphate, or the like, it is very beneficial to reduce the content of Si in the resulting phosphoric acid liquid since Si is an impurity.

### <Cation exchange step (S3)>

The cation exchange step (S3) is preferably provided after the dissolution step (S2).

In the cation exchange step (S3), the phosphoric acid liquid obtained in the dissolution step (S2) is subjected to a treatment using a cation exchange resin (cation exchange treatment). As a result, cations are removed from the phosphoric acid liquid, and the purity of the phosphate to be obtained finally increases.

Examples of the treatment using the cation exchange resin include treatments similar to those described in paragraphs [0022] to [0024] of Patent Literature 1.

### <Addition step (S4)>

The addition step (S4) is preferably provided after the dissolution step (S2) or the cation exchange step (S3).

In the addition step (S4), an additional raw material corresponding to the type of the target phosphate is added to the phosphoric acid liquid obtained in the dissolution step (S2) (alternatively, the phosphoric acid liquid subjected to the treatment in the cation exchange step (S3)). Thus, the target phosphate is obtained.

For example, when the target phosphate is calcium phosphate, calcium nitrate is added as the additional raw material to the phosphoric acid liquid in the addition step (S4). Thereafter, precipitation of calcium phosphate is obtained by adding an alkali to the phosphoric acid liquid to which calcium nitrate has been added. As the alkali added here, those described as the alkali used in the precipitation formation step (S1) described above are suitably exemplified.

At this time, the contents of Si and Fe as impurities can be reduced in the phosphate (calcium phosphate) to be obtained finally by accelerating the alkali addition timing in the precipitation formation step (S1) described above.

For example, when the target phosphate is iron phosphate, iron nitrate is added as the additional raw material to the phosphoric acid liquid in the addition step (S4). As a result, precipitation of iron phosphate is obtained.

At this time, the content of Si as an impurity in the phosphate (iron phosphate) to be obtained finally can be reduced by delaying the alkali addition timing in the precipitation formation step (S1) described above and increasing the concentration of the acid in the dissolution step (S2) described above.

As described above, according to the present embodiment, the target phosphate can be obtained with few impurities.

### EXAMPLES

Hereinafter, the present invention will be specifically described with reference to examples. However, the present invention is not limited to the examples described below.

The target phosphate was obtained through each step described above.

At this time, the alkali addition timing in the precipitation formation step (S1) and the concentration of the acid (nitric acid) in the dissolution step (S2) were changed. Aqueous ammonia (concentration: 28 mass%) was used as the alkali.

Prior to the precipitation formation step (S1), in the acid leaching step (S0), components contained in slag 1 (steelmaking slag) having the composition shown in Table 1 below were leached into nitric acid (concentration: 0.5 M) to obtain a phosphorus-containing liquid.

### [Table 1]

**Table 1**

| | Composition [mass%] | | | | | | | |
|---|---|---|---|---|---|---|---|---|
| | T. Fe | SiO₂ | T-CaO | Al₂O₃ | MnO | MgO | S | P₂O₅ |
| Slag 1 | 27 | 19 | 31 | 4 | 4 | 4 | 0.01 | 3.2 |

### <Example 1>

The target phosphate was determined to be calcium phosphate.

In the precipitation formation step (S1), a precipitate was obtained by setting the alkali addition timing (the time from when the phosphorus-containing liquid is obtained to when the alkali is added thereto) to 1 h or less.

In the dissolution step (S2), the precipitate was dissolved using nitric acid at a concentration of 13.5 M to obtain a phosphoric acid liquid.

In the cation exchange step (S3), the phosphoric acid liquid was allowed to pass through a cation exchange resin to obtain a phosphoric acid liquid having the composition shown in Table 2 below.

Thereafter, in the addition step (S4), calcium nitrate as the additional raw material was added to the phosphoric acid liquid to obtain single-phase calcium phosphate.

### <Example 2>

In the precipitation formation step (S1), the alkali addition timing was changed to 4 h. A phosphoric acid liquid having the composition shown in Table 2 below was obtained in the same manner as in Example 1 other than that.

Thereafter, in the addition step (S4), calcium nitrate as the additional raw material was added to the phosphoric acid liquid to obtain single-phase calcium phosphate.

As shown in the following Table 2, in Example 2, the content of Fe as an impurity was larger in the phosphoric acid liquid than in Example 1. As a result, the content of Fe as an impurity was large in calcium phosphate obtained from the phosphoric acid liquid.

### [Table 2]

**Table 2**

| | Composition [mmol/100 mL] | | | | | | |
|---|---|---|---|---|---|---|---|
| | Mg | Al | P | Ca | Mn | Fe | Si |
| Example 1 | 0.008 | 0.009 | 0.226 | 0.010 | 0.004 | 0.019 | 0.007 |
| Example 2 | 0.010 | 0.012 | 0.249 | 0.013 | 0.005 | 0.088 | 0.015 |

### <Example 3>

The target phosphate was determined to be iron phosphate.

In the precipitation formation step (S1), a precipitate was obtained by setting the alkali addition timing (the time from when the phosphorus-containing liquid is obtained to when the alkali is added thereto) to 4 h.

In the dissolution step (S2), the precipitate was dissolved using nitric acid at a concentration of 13.5 M to obtain a phosphoric acid liquid.

In the cation exchange step (S3), the phosphoric acid liquid was allowed to pass through a cation exchange resin to obtain a phosphoric acid liquid having the composition shown in Table 3 below.

Thereafter, in the addition step (S4), iron nitrate as the additional raw material was added to the phosphoric acid liquid to obtain iron phosphate.

### <Example 4>

In the dissolution step (S2), nitric acid at a concentration of 8.5 M was used. A phosphoric acid liquid having the composition shown in Table 3 below was obtained in the same manner as in Example 3 other than that.

Thereafter, in the addition step (S4), iron nitrate as the additional raw material was added to the phosphoric acid liquid to obtain iron phosphate.

As shown in the following Table 3, in Example 4, the content of Si as an impurity was larger in the phosphoric acid liquid than in Example 3. As a result, the content of Si as an impurity was large in iron phosphate obtained from the phosphoric acid liquid.

### [Table 3]

**Table 3**

| | Composition [mmol/100 mL] | | | | | | |
|---|---|---|---|---|---|---|---|
| | Mg | Al | P | Ca | Mn | Fe | Si |
| Example 3 | 0.010 | 0.005 | 0.236 | 0.011 | 0.007 | 0.099 | 0.005 |
| Example 4 | 0.006 | 0.011 | 0.221 | 0.009 | 0.002 | 0.082 | 0.020 |

## Claims

1. A method for producing a phosphate, which is a method for producing a target phosphate, the method comprising:
a precipitation formation step of adding an alkali to a phosphorus-containing liquid to obtain a precipitate; and
a dissolution step of dissolving the precipitate with an acid to obtain a phosphoric acid liquid, wherein
in the precipitation formation step, the composition of the precipitate is changed by changing a timing of adding the alkali according to the type of the phosphate.

2. The method for producing a phosphate according to claim 1, further comprising an addition step after the dissolution step, wherein
in the addition step, an additional raw material corresponding to the type of the phosphate is added to the phosphoric acid liquid to obtain the phosphate.

3. The method for producing a phosphate according to claim 2, further comprising a cation exchange step after the dissolution step and before the addition step, wherein
in the cation exchange step, the phosphoric acid liquid is treated using a cation exchange resin.

4. The method for producing a phosphate according to any one of claims 1 to 3, wherein in the dissolution step, a strong acid at a concentration of 10 M or more is used as the acid.

5. The method for producing a phosphate according to any one of claims 1 to 4, wherein in the dissolution step, at least one selected from a group consisting of nitric acid, hydrochloric acid, sulfuric acid, phosphoric acid, and an organic acid is used as the acid.

6. The method for producing a phosphate according to any one of claims 1 to 5, further comprising an acid leaching step before the precipitation formation step, wherein
in the acid leaching step, a component contained in a starting material containing phosphorus is leached into an acid to obtain the phosphorus-containing liquid.

7. The method for producing a phosphate according to claim 6, wherein in the dissolution step, a time from when the phosphorus-containing liquid is obtained to when the alkali is added is changed.

8. The method for producing a phosphate according to claim 6 or 7, wherein the starting material is steelmaking slag.

9. The method for producing a phosphate according to any one of claims 1 to 8, wherein the phosphorus-containing liquid contains at least calcium, phosphorus, aluminum, and iron elements.
